# EUROPÄISCHE PATENTSCHRIFT

(11) **EP 1 771 495 B1**
(45) Veröffentlichungstag und Bekanntmachung des Hinweises auf die Patenterteilung: **08.08.2018**
(21) Anmeldenummer: 05758056.5
(22) Anmeldetag: 16.06.2005
(51) Int. Cl.: C08G 71/00

(54) **ZWEI-KOMPONENTEN-BINDEMITTEL**
TWO-COMPONENT BONDING AGENT
ADH SIF À DEUX CONSTITUANTS

(30) Priorität: 22.07.2004 DE 102004035542
(43) Veröffentlichungstag der Anmeldung: 11.04.2007
(73) Patentinhaber: Henkel AG & Co. KGaA, 40589 Düsseldorf (DE)
(72) Erfinder: MÖLLER, Thomas, 40593 Düsseldorf (DE); KINZELMANN, Hans-Georg, 50259 Pulheim (DE)
(86) Internationale Anmeldenummer: PCT/EP2005/006455
(87) Internationale Veröffentlichungsnummer: WO 2006/010408

(56) Entgegenhaltungen:
- EP-A- 1 020 457
- DE-A1- 3 726 497
- US-A- 3 084 140
- US-A- 4 616 066
- US-A- 4 806 611

## Beschreibung

Die vorliegende Erfindung betrifft ein Bindemittel-System, mindestens enthaltend Komponenten (A) und (B), bei dem eine mindestens zwei zyklische Carbonatgruppen tragende Verbindung, oder ein Gemisch aus zwei oder mehr mindestens zwei zyklische Carbonatgruppen tragende Verbindungen als Komponente (A) und eine mindestens zwei (-NHR-)-Atomgruppierungen tragende Verbindung oder ein Gemisch aus zwei oder mehr mindestens zwei (-NHR-)-Atomgruppierungen tragende Verbindungen als Komponente (B) enthalten ist, sowie die Verwendung des Bindemittel-Systems als Kleb-/Dichtstoff und die Verwendung dieses Kleb-/Dichtstoffes.

Zwei-Komponenten-Bindemittel-Systeme, insbesondere auf Basis von Polyolen und NCO-terminierten Verbindungen, sind seit langem Stand der Technik. Sie werden beispielsweise im Bereich der metallverarbeitenden Industrie, der Fahrzeugindustrie, der Elektroindustrie, der Verpackungsindustrie oder der Bauindustrie als Kleb-, Dicht-, Füllstoffe oder Vergußmassen (Casting) eingesetzt. Nachteilig an den als sogenannte Härter eingesetzten NCO-Gruppen tragenden Polyurethanen ist die Empfindlichkeit gegenüber Feuchtigkeit. Bei der Lagerung dieser Verbindungen müssen daher entsprechend dichte Gebinde zum Einsatz kommen. Einmal geöffnete Gebinde sind in der Regel sofort bzw. kurzfristig zu verbrauchen, um einen Qualitätsverlust zu vermeiden. Auch muß in der Regel die Polyolkomponente vor dem Mischen mit der Härterkomponente sorgfältig getrocknet werden, da ansonsten eine Restmenge an Feuchtigkeit zu unerwünschter Blasenbildung im Klebstofffilm führen kann, die unter Umständen Nachteile bei der Endanwendung verursacht. Ein weiterer Nachteil zumindest einiger Bindemittel-Systeme auf Basis von Zwei-Komponenten-Polyurethan-Klebstoffen ist die Toxikologie von monomeren Isocyanaten, insbesondere leicht flüchtigen und/oder leicht migrierenden monomeren Diisocyanaten, in der Härterkomponente. Die Anwendung von Produkten mit einem hohen Gehalt an leichtflüchtigen Diisocyanaten erfordert seitens des Anwenders aufwendige Arbeitsschutzmaßnahmen, insbesondere aufwendige Maßnahmen zur Reinhaltung der Atemluft, gesetzlich vorgegeben durch die höchstzulässige Konzentration von Arbeitsstoffen als Gas, Dampf oder Schwebstoff in der Luft am Arbeitsplatz (jährlich aktualisierte MAK-Wert-Liste der Technischen Regel TRGS 900 des Bundesministeriums für Arbeit und Soziales).

Freie monomere Polyisocyanate können aber auch in die Beschichtung oder Verklebung, oder zum Teil auch in die beschichteten oder verklebten Materialien hinein "wandern". Solche wandernen Bestandteile werden in Fachkreisen häufig als "Migrate" bezeichnet. Durch Kontakt mit Feuchtigkeit werden die Isocyanatgruppen der Migrate kontinuierlich zu Aminogruppen umgesetzt.

Im Verpackungsbereich, speziell bei Lebensmittelverpackungen, sind Migrate besonders unerwünscht. Einerseits kann die Wanderung der Migrate durch das Verpackungsmaterial hindurch zu einer Kontamination des verpackten Gutes führen, andererseits sind, abhängig von der Menge des migratfähigem freien monomeren Polyisocyanates, lange Wartezeiten notwendig, bevor das Verpackungsmaterial "Migrat-frei" ist und verwendet werden darf.

Ein weiterer unerwünschter Effekt, der durch die Migration monomerer Polyisocyanate hervorgerufen werden kann, ist der sogenannte Antisiegeleffekt bei der Herstellung von Beuteln oder Tragetaschen aus kaschierten Kunststoff-Folien: Häufig enthalten die kaschierten Kunststoff-Folien Gleitmittel auf Basis von Fettsäureamiden. Durch Reaktion von migriertem monomeren Polyisocyanat mit dem Fettsäureamid und Feuchtigkeit werden an der Folienoberfläche Harnstoffverbindungen gebildet, die einen Schmelzpunkt besitzen, der über der Versiegelungstemperatur der Kunststoff-Folien liegen kann. Dadurch entsteht eine artfremde Antisiegel-Schicht zwischen den zu versiegelnden Folienteilen, die einer einheitlichen Siegel-Nahtbildung entgegenwirkt.

Produkte auf Basis von zyklischen Carbonatgruppen tragenden Verbindungen und aliphatischen Polyaminen sind prinzipiell bekannt.

Die US 3,072,613 beschreibt als Klebstoff einsetzbare harzartige Polyurethanprodukte, die durch Reaktion eines multifunktionellen zyklischen Carbonates mit einem polyfunktionellen Amin bei einer Temperatur von größer gleich 0 °C erhalten werden und eine reduzierte Viskosität von größer gleich 0,12 als 0,2 Gew.-%ige Lösung in Dimethylformamid aufweisen. Die multifunktionellen zyklischen Carbonate werden durch Umsetzung von monomeren Verbindungen, beispielsweise durch Umsetzung von Hexamethylendiisocyanat mit Glycerincarbonat, Diglycerin mit Diethylcarbonat oder 2,2-Propylen-bis-(4-Phenol)-diepoxid mit Ethylencarbonat erhalten. Die polyfunktionellen Amine besitzen 2 bis 4 Aminogruppen und ein aliphatisches Kohlenwasserstoffgerüst mit 2 bis 20 Kohlenstoffatomen.

US 4,883,853 beschreibt als Klebstoff einsetzbare Polyurethane, erhältlich durch Umsetzung von Urethanpolyol mit Polyisocyanat, wobei das Urethanpolyol durch Umsetzung von polyfunktionellen Aminen mit Ethylencarbonat erhältlich ist.

US 5,977,262 beschreibt ein Verfahren zur Herstellung von Hydroxyurethanen aus zyklischen Carbonaten mit primären Aminen in Gegenwart von katalytischen Mengen einer Base, deren korrespondierende Säure einen pKa-Wert von größer gleich 11 besitzt.

WO 02/079148 beschreibt ein Verfahren zur Herstellung von Carbonat-Urethan-Zusammensetzungen durch Umsetzung von monomeren Polyisocyanaten mit hydroxylgruppenhaltigen zyklischen Carbonaten in einem Lösemittel und in Gegenwart einer Base. Die Carbonat-Urethan-Zusammensetzungen werden unter Öffnung des Carbonatringes mit einem Überschuss an Diamin umgesetzt und dienen als aminogruppentragende Epoxidvernetzer.

EP 1 020 457 A1 offenbart Zweikomponentenklebstoffe aus einem Bindemittelsystem enthaltend Epoxycyclocarbonatoligomere mit einem Molekuargewicht von mehr als 1000 g/mol. Eine Reaktion des Epoxycyclocarbonatoligomers mit m-Xylylendiamin (M = 132 g/mol) führt zur Addukten, welche als Strukturklebstoffe mit Epoxidharzen als Härter dienen.

Die Aufgabe der vorliegenden Erfindung war es, ein Bindemittel-System zur Verfügung zu stellen, das mindestens gleich gute Produkteigenschaften aufweist wie ein Zwei-Komponenten-Bindemittel-System auf Basis von Isocyanatgruppen tragenden Verbindungen und Polyolen, ohne aber die Nachteile derartiger Systeme zu besitzen. Insbesondere sollen die Systeme gute Klebe-/Dichteigenschaften aufweisen.

Die erfindungsgemäße Lösung der Aufgabe ist den Patentansprüchen zu entnehmen.

Sie besteht in einem Zweikomponenten-Klebstoff aus einem Bindemittel-System enthaltend die Komponenten (A) und (B), bei dem
a) eine mindestens zwei zyklische Carbonatgruppen tragende Verbindung, oder ein Gemisch aus zwei oder mehr mindestens zwei zyklische Carbonatgruppen tragende Verbindungen als Komponente (A) enthalten ist, wobei Komponente (A) ein mittleres Molekulargewicht (Mₙ) von ≥1000 g/mol aufweist und
b) eine mindestens zwei (-NHR-)-Atomgruppierungen tragende Verbindung oder ein Gemisch aus zwei oder mehr mindestens zwei (-NHR-)-Atomgruppierungen tragende Verbindungen als Komponente (B) enthalten ist, mit R = H, Alkyl- oder Aryl-Rest, und Komponente B als Komponente (B1) ein mittleres Molekulargewicht (Mn) von 60 g/mol bis 500 g/mol oder als Komponente (B2) ein mittleres Molekulargewicht (Mn) von >500 g/mol aufweist, wobei Komponente (B) einzeln als Komponente (B2) oder als Gemisch von (B1) mit (B2) vorliegt,
zum Verkleben von Papier, Pappe, Holz, Kunststoff, Metall oder Steingut.

Die Obergrenze des Molekulargewichtes (Mₙ) von Komponente (A) liegt bei ca. 10. 000 000 g/mol. Bevorzugt weist Komponente (A) ein mittleres Molekulargewicht (Mₙ) von 1500 g/mol bis 100 000 g/mol, insbesondere bevorzugt von 2000 g/mol bis 50 000 g/mol auf.

In der nachfolgenden Beschreibung bedeuten
(a) eine primäre Amingruppe eine Atomgruppierung der Form "-NH₂" (R= H),
(b) eine sekundäre Amingruppe eine Atomgruppierung der Form "-NHR-" und
(c) eine tertiäre Amingruppe eine Atomgruppierung der Form "(R₃)N".

Unter einer Aminogruppe wird im Rahmen der Erfindung eine Atomgruppierung der Form "-NH₂" verstanden.

Überraschend wurde gefunden, dass derartige Bindemittel-Systeme sich als Kleb-/Dichtstoffe eignen und sich durch eine sehr gute Adhäsion auf Oberflächen unterschiedlichster Materialien auszeichnen. Die im wesentlichen NCO-Gruppen freien Polyurethan-Kleb-/Dichtstoffe können dabei in Substanz oder als Lösung in gebräuchlichen organischen Lösemitteln verwendet werden. Im wesentlichen frei an NCO-Gruppen bedeutet, dass der NCO-Gehalt in Komponente (A) < 0,1 Gew.-% beträgt.

Die im vorliegenden Text angegebenen Molekulargewichte beziehen sich, soweit nicht anders angegeben, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Als mindestens zwei zyklische Carbonatgruppen tragende Verbindung können beliebige Polymere eingesetzt werden, sofern das Kriterium der Molmasse erfüllt ist und sie keine anderen funktionellen Gruppen aufweisen, welche die Reaktion mit der Komponente (B) stören könnten. Die mindestens eine mindestens zwei zyklische Carbonatgruppen tragende Verbindung kann sowohl linear als auch verzweigt sein.

Die zyklischen Carbonatgruppen von Komponente (A) sind vorzugsweise an den Polymerkettenenden angeordnet, jedoch können in manchen Fällen auch Verbindungen als Komponente (A) eingesetzt werden, welche diese Gruppen in statistischer Verteilung über die gesamte Polymerkette enthalten. Die zyklischen Carbonatgruppen können somit sowohl in die Hauptkette eingebaut als auch seitenständig angeordnet sein.

Bevorzugt ist Komponente (A) ein zyklische Carbonatgruppen tragendes Polymer, wobei das Polymer ausgewählt ist aus der Gruppe der fettchemischen Verbindungen, Polyether, Polyetherpolyole, Polyester, Polyesterpolyole, Polycarbonate, Polycarbonsäuren, Polyacrylate, Polymethacrylate, Polyamide, Polyamine, Polyurethane oder Mischungen daraus. Als fettchemische Verbindungen werden bevorzugt Rizinusöl oder Dimerdiol eingesetzt, die noch alkoxyliert sind.

Unter Polyamiden als Komponente A werden solche verstanden, die keine aminischen NH-Gruppen aufweisen.

Unter Cyclocarbonaten sind Strukturen zu verstehen, bei denen eine Kohlensäureestergruppe Teil einer Ringstruktur ist gemäß Formel (I): 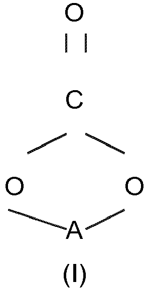 in der bedeuten:
A = (C(R¹R²))ₙ mit n ≥ 2, bevorzugt n = 2 oder 3, insbesondere bevorzugt n= 2; R¹, R² =
a) Wasserstoffatom, einen gesättigten oder ungesättigten, gerad- oder verzweigtkettigen oder zyklischen, aromatischen oder arylaliphatischen, gegebenenfalls substituierten, Kohlenwasserstoffrest mit 1 bis 12 Kohlenstoffatomen, oder
b) Etherrest mit 1 bis 12 Kohlenstoffatomen und bis zu 3 Sauerstoffatomen oder
c) R³X, wobei R³ einen zweiwertigen aliphatischen, cycloaliphatischen, aromatischen, arylaliphatischen oder etherhaltigen ggf. substituierten Kohlenwasserstoffrest mit 1 bis 20 Kohlenstoffatomen und X eine Hydroxy-, Epoxy, Carbonsäure-, Carbonsäureestergruppe darstellt, oder
d) Z, wobei Z eine ungesättigte polymerisierbare Gruppe darstellt, insbesondere eine Vinyl-, (Meth)Acryl-, Maleinsäure-, Fumarsäure-, Itaconsäure- oder Crotonsäure- -ester -gruppe
und wobei R¹und R² untereinander identisch oder unterschiedlich sein können.

Konkrete Beispiele für Cyclocarbonate sind: Ethylencarbonat (1,3-Dioxolan-2-on); Propylencarbonat (4-Methyl-1,3-dioxolan-2-on); Glycerincarbonat (4-Methylhydroxy-1,3-dioxolan-2-on); 5-Ethyl-5-(Hydroxymethyl)-1,3-Dioxan-2-on; 1,3-Dioxan-2-on; 5-((Allyloxi)methyl)-5-ethyl-1,3-dioxan-2-on; 1,3-Dioxepin-2-on. Epoxidgruppentragende cyclische Carbonate werden beispielsweise in der DE 3726497 A1 beschrieben.

Zyklische Carbonate werden beispielsweise durch Umesterung von Kohlensäureestern, wie z.B. Dimethylcarbonat, Diethylcarbonat, Diphenylcarbonat, Ethylencarbonat oder Propylencarbonat mit Polyolen erhalten, wobei die Polyole bevorzugt mindestens vier Hydroxylgruppen tragen, von denen je zwei mit Kohlensäureestern in einer Umesterung zu cyclischen Fünfring- oder Sechsring-Carbonaten reagieren. Als mehrwertige Polyole sind beispielsweise zu nennen: Diglycerin, Triglycerin, Polyglycerin, Zuckeralkohole (z.B. Xylit, Mannit Erytherit), Di- und Trimethylolpropan, Di- und Trimethylolethan, Pentaerythrit, Dipentaerythrit. Digylcerin ist hierbei besonders bevorzugt. Die Herstellung der cyclischen Carbonate aus den Polyolen geschieht in dem Fachmann geläufiger Weise, insbesondere durch Umsetzung der Polyole mit den Carbonaten im stöchiometrischen Verhältnis 1,0 : 1,0 bis 1,0 : 10,0 (Verhältnis von 1,2- oder 1,3-Glykolgruppen zu Carbonatgruppen), insbesondere unter Katalyse. Als Katalysatoren kommen z.B. basische Katalysatoren, wie zum Beispiel: Carbonate, Bicarbonate, Alkoholate, Carboxylate, Hydroxide oder Oxide der Alkali- und Erdalkalimetalle in Frage, wie auch Lewis-saure Substanzen, wie zum Beispiel organische Verbindungen des zwei- oder vierwertigen Zinns oder Titans, zum Beispiel Zinn-(II)-octoat, Zinn-(II)-laureat, Dibutylzinnoxid oder Titantetrabutylat. Die Katalysatoren können z.B. in einer Menge von 0,01 bis 1,0 Gew.-% bezogen auf Polyol und Kohlensäureester zugesetzt werden.

Zyklische Carbonate können auch durch Umsetzung von Kohlendioxid mit Epoxidverbindungen nach bekannter Art und Weise erhalten werden. Derartige Umsetzungen sind beispielsweise in WO 84/03701, DE-A 3529263 oder DE-A 3600602 beschrieben.

Durch Reaktion von Polyolen mit Phosgen sind sowohl aliphatische als auch aromatische cyclische Carbonate erhältlich (z. B. US 3,624,016).

Die Ausstattung des Polymeren mit mindestens zwei zyklischen Carbonatgruppen, im Folgenden als Funktionalisierung bezeichnet, kann während des Polymerkettenaufbaus erfolgen, wobei entsprechende monomere Bausteine, die Cyclocarbonatgruppen enthalten, eingesetzt werden. Bevorzugt ist aber die nachträgliche Funktionalisierung eines bereits hergestellten Polymeren. Besonders bevorzugt ist hierbei die Addition von zyklischen Hydroxyalkylcarbonaten an Anhydridgruppen oder Isocyanatgruppen tragende Polymere. Prinzipiell ist ein entsprechendes Verfahren ist in der EP 0328150 A2 beschrieben. Bevorzugt werden für die Additionsreaktionen zyklische Hydroxyalkylcarbonate mit 5-gliedrigen oder 6-gliedrigen Carbonatringen eingesetzt. Ganz besonders bevorzugt wird Glycerincarbonat verwendet.

Ebenso ist es möglich solche zyklischen Hydroxyalkylcarbonate durch Umesterung einzureagieren. Dabei können beispielsweise C₁ - C₄-Alkylestergruppen des Polymeren direkt umgesetzt werden, oder es ist möglich Hydroxygruppen der Polymere mit einer Estergruppe eines niedermolekularen C₂ bis C₆- Dicarbonsäureesters umzusetzen und anschließend die verbleibenden C₁-C₄-Alkyl-Estergruppen mit einem Hydroxyalkylcarbonat umzusetzen. Unter niedermolekularen Dicarbonsäureester sind solche zu verstehen, deren Dicarbonsäurerest aus 2 bis 44 C-Atomen, bevorzugt 2 bis 12 C-Atomen, besonders bevorzugt 2 bis 6 C-Atomen aufgebaut ist und eine lineare oder verzweigte aliphatische, cycloaliphatische oder aromatische Struktur aufweisen kann. Eine weitere Möglichkeit Hydroxyalkylcarbonate einreagieren zu lassen ist deren Reaktion mit Säurehalogeniden, insbesondere Carbonsäurehalogeniden. In einer weiteren bevorzugten Ausführungsform der Erfindung werden als Komponente (A) Verbindungen eingesetzt, die durch Addition von Kohlendioxid an Epoxidgruppen-haltige Polymere erhältlich sind. Prinzipiell ist ein derartiges Additionsverfahren in DE-OS 3529263 bzw. DE-OS 3600602 beschrieben.

Durch die Auswahl der Komponente (A) und die Auswahl der Funktionalisierung mit den zyklischen Carbonatgruppen ist es möglich Polymere zu erhalten, die Urethangruppen enthalten oder nur Estergruppen. Dadurch kann die Viskosität des Polymeren beeinflusst werden. In einer weiteren Ausführungsform kann in dem Bindemittel-System auch eine weitere niedermolekulare Komponente (A1) enthalten sein, die zyklische Carbonatgruppen aufweist. Diese Komponente soll ein Molekulargewicht < 1000 g/mol aufweisen, bevorzugt < 800 , und mindestens zwei zyklische Carbonatgruppen enthalten. Es kann sich dabei beispielsweise um mit CO₂ umgesetzte Di-Epoxide handeln oder um Di- oder Tricarbonsäureester, die an den Estergruppen mit den oben erwähnten hydroxyfunktionellen zyklischen Carbonaten umgesetzt wurden. Komponenten dieser Art werden auch als Reaktivverdünner bezeichnet und können beispielsweise in Mengen bis zu 60 Gew.-%, bevorzugt bis zu 25 Gew.% bezogen auf (A) zur Beeinflussung der Viskosität des Bindemittel-Systems zugesetzt werden.

In dem erfindungsgemäßen Bindemittel-System, ist neben der Komponente (A) mindestens eine mindestens zwei (-NHR-)-Atomgruppierungen tragende Verbindung oder ein Gemisch aus zwei oder mehr mindestens zwei (-NHR-)-Atomgruppierungen tragende Verbindungen als Komponente (B) enthalten, mit R = H, Alkyl- oder Aryl-Rest.

Komponente (B) weist als Komponente (B1) ein mittleres Molekulargewicht (Mₙ) von 60 g/mol bis 500 g/mol, bevorzugt von 60 g/mol bis 300 g/mol auf oder weist als Komponente (B2) ein mittleres Molekulargewicht (Mₙ) von ≥500 g/mol auf, wobei Komponente (B) einzeln als Komponente (B2) oder als Gemisch von (B1) mit (B2) vorliegt. Das Gewichtsverhältnis von (B1) zu (B2) in eingesetzten Mischungen von (B1) mit (B2) beträgt 0,5 : 20 bis 20 : 0,5.

Die Obergrenze des Molekulargewichtes (Mₙ) von Komponente (B2) liegt bei ca. 5 000 000 g/mol. Bevorzugt weist Komponente (B2) ein mittleres Molekulargewicht (Mₙ) von 800 g/mol bis 2 000 000 g/mol, insbesondere bevorzugt von 1000 g/mol bis 1 500 000 g/mol auf.

Die erfindungsgemäß einsetzbare Komponente (B) kann sowohl linear als auch verzweigt sein. Das Molekülgerüst von Komponente (B) kann aliphatische, aromatische, aliphatisch-aromatische, cycloaliphatische und heterocyclische Strukturen enthalten. Im Molekül können primäre und/oder sekundäre und tertiäre Amine vorhanden sein, jedoch müssen mindestens zwei (-NHR-)-Atomgruppierungen, bevorzugt zwei Aminogruppen, enthalten sein. Die Aminfunktionen selbst sind aliphatisch, das heißt dass die dem Aminstickstoff unmittelbar benachbarten Kohlenstoffatome nicht Teil einer aromatischen Ringstruktur sind.

Die erfindungsgemäß eingesetzte Komponente (B1) wird als Einzelkomponente oder auch als Mischung der entsprechenden, als Komponente (B1) einsetzbaren Verbindungen eingesetzt.

Komponente (B1) wird bevorzugt aus der Gruppe der Alkylendiamine und/oder Cycloalkylendiamine ausgewählt.

Unter Alkylendiaminen sind Verbindungen der allgemeinen Formel R⁴R⁵N-Z - NR⁶R⁷ zu verstehen bei denen R⁴, R⁵, R⁶, R⁷ unabhängig voneinander H, Alkyl- oder Cycloalkylreste sein können. Z bedeutet eine lineare oder verzweigte gesättigte oder ungesättigte Alkylenkette mit ≥ 2 C-Atomen. Bevorzugte Beispiele sind Diaminoethan, Diaminopropan, 1,2-Diamino-2-methylpropan, 1,3-Diamino-2,2-dimethylpropan, Diaminobutan, Diaminopentan, 1,5-Diamino-2-methylpentan, Neopentyldiamin, Diaminohexan, 1,6-Diamino-2,2,4-trimethylhexan, 1,6-Diamino-2,4,4-trimethylhexan, Diaminoheptan, Diaminooctan, Diaminononan, Diaminodecan, Diaminoundecan,Diaminododecan, Dimeramin (kommerziell beispielsweise unter dem Handelsnamen Versamin 551 von der Fa. Cognis erhältlich), Triacetondiamin, Dioxadecandiamin, N,N-Bis(3-Aminopropyl)-dodecylamin (kommerziell beispielsweise unter dem Handelsnamen Lonzabac 12.30 von der Fa. Lonza erhältlich) oder Gemische daraus.

Unter Cycloalkylendiaminen sind Verbindungen der allgemeinen Formel R⁸R⁹N-Y -NR¹⁰R¹¹ zu verstehen bei denen R⁸, R⁹, R¹⁰, R¹¹ unabhängig voneinander H, Alkyl- oder Cycloalkyreste sein können. Y bedeutet einen gesättigten oder ungesättigten Cycloalkylrest mit ≥ 3 C-Atomen, vorzugsweise > 4 C-Atomen. Bevorzugt sind Diaminocyclopentane, Diaminocyclohexane, Diaminocycloheptane, beispieisweise1,4-Cyclohexandiamin; 4,4'-Methylen-biscyclohexylamin, 4,4'-Isopropylen-bis- cyclohexylamin, Isophorondiamin, m-Xylylendiamin, N-Aminoethylpiperazin oder Gemische daraus.

Die Diamine können auch sowohl Alkyl- als auch Cycloalkylreste gemeinsam enthalten. Bevorzugte Beispiele sind Aminoethylpiperazin, 1,8-Diamino-p-menthan, Isophorondiamin, 1,2-(Bisaminomethyl)-cyclohexan, 1,3-(Bisaminomethyl)-cyclohexan, 1,4-(Bisaminomethyl)-cyclohexan, Bis-(4-aminocyclohexyl)-methan.

Weitere Beispiele für als Komponente (B1) erfindungsgemäß einsetzbare Diamine sind Bis-(6-aminohexyl)-amin, α,α-Diaminoxylole, usw.

Bevorzugt werden als Komponente (B1) und/oder Komponente (B2) polyfunktionelle Amine eingesetzt. Insbesondere sind dies aminfunktionalisierte Polyalkylenglykole, wie 1,2-Bis-(aminoethoxy)-ethan, 1,13-Diamino-4,7,10-trioxatridecan. Erfindungsgemäß einsetzbare aminfunktionalisierte Polyalkylenglykole sind kommerziell beispielsweise als Jeffamine® über die Firma Huntsman Corp. erhältlich. Bevorzugt sind Jeffamine: D-230, D-400, D-2000, D-4000, T-403, T-3000, T-5000, ED-600, ED-2003.

Ebenfalls bevorzugt als Komponente (B1) und/oder Komponente (B2) einsetzbare polyfunktionelle Amine sind Verbindungen der allgemeinen Formel H₂N-(CH₂CH₂-NH)ₓ -CH2CH2-NH2, mit 2 ≤ x ≤ 10, wie z.B. Diethylentriamin, Triethylentetramin, Tetraethylenpentamin, Pentaethylenhexamin, Dipropylentriamin, Bis-(3-aminopropyl)-amin, N,N-Bis(3-aminopropyl)-ethylendiamin, Bishexamethylentriamin, Heptaethylenoctamin und ähnliche.

Als Komponente (B2) werden bevorzugt Polymere eingesetzt, die ausgewählt sind aus der Gruppe der Polyamine, Polyimine, Polyether, Polyamide, Polyaminoamide, Polyurethane, Polyolefine, Polyvinylamine oder Mischungen daraus.

Polyamine, die als Komponente (B2) einsetzbar sind, werden bei Henry Lee und Kris Neville, Handbook of Epoxy Resins, Kapitel 7, Seiten 7-1 bis 7-33, McGraw-Hill Book Company, New York 1967 und dort zitierte Literatur, sowie bei Clayton A. May, Epoxy Resins, Seiten 466 - 468, Marcel Dekker, New York 1988 und dort zitierte Literatur, beschrieben.

Bevorzugte Polyimine sind Polyethylenimine. Die Aminwasserstofffunktionen der Polyethylenimine können auch teilweise modifiziert sein, wie zum Beispiel durch Alkylierung, Benzylierung, Acylierung, Alkoxylierung, vorzugsweise Ethoxylierung und/oder Propoxylierung. Insbesondere bevorzugt ist die Modifizierung mit Epichlorhydrin. Bevorzugt einsetzbare Polyethylenimine sind kommerziell von der Firma BASF unter dem Handelsnamen Lupasol® PS, P, WF, Bo 150, FC, FG, G-100, G-20, G-35, G-500, HF, PO-100, PR-8515 und SK oder von der Firma DOW unter dem Handelsnamen Polyethylenimin 6, 12, 18, 600, 1000 erhältlich.

Polyaminoamide enthalten in der Hauptkette sowohl Amin- als auch Amid-Funktionalitäten. Polyaminoamide werden durch Polykondensation von Polyaminen und Dicarbonsäuren oder durch Michael-Addition von Acrylsäureestern an Diamine und anschließender Polykondensation der resultierenden Aminosäureester hergestellt. Polyaminoamide, die als Komponente (B2) einsetzbar sind, werden bei Henry Lee und Kris Neville, Handbook of Epoxy Resins, Kapitel 10, Seiten 10-1 bis 10-23, McGraw-Hill Book Company, New York 1967, sowie bei Clayton A. May, Epoxy Resins, Seiten 469, Marcel Dekker, New York 1988 und dort zitierte Literatur, beschrieben.

Im Rahmen der vorliegenden Erfindung werden bevorzugt Polyaminoamide eingesetzt, die erhältlich sind durch Polykondensation von aliphatischen Polyaminen und dimerisierten oder trimerisierten Fettsäuren. Einsetzbar sind auch die ungepfropften und gepfropften Polyaminoamide, wie sie in der WO 94/29422 beschrieben sind. Kommerziell sind Polyaminoamide von der Firma Cognis unter dem Handelsnamen Versamid®, von der Firma Bakelite AG unter dem Handelsnamen Ruetadur oder der Firma S.I.Q. Kunstharz GmbH aus der SIQ-Therm-Produktreihe erhältlich.

Weitere bevorzugt als Komponente (B2) einsetzbare Polyamine sind Polyvinylamine. Polyvinylamine können beispielsweise hergestellt werden durch Polymerisation von N-Vinylacylaminen, wie N-Vinylformamid, N-Vinylacetamid, usw. und anschließender vollständiger oder teilweiser Hydrolyse der Amidgruppe. Bevorzugt einsetzbare Polyvinylamine sind kommerziell von der Firma BASF unter dem Handelsnamen Lupamin®: 1500, 4500, 4595, 9000, 9030, 9095 erhältlich.

Aminterminierte Polyetherurethane sind beispielsweise von der Firma Henkel unter dem Handelsnamen Liofol UR 9640 erhältlich.

Weitere, als Komponente (B2) einsetzbare Polyamine sind hochverzweigte Polymere, die an den Zweigenden Aminogruppen, insbesondere primäre Aminogruppen, tragen.

Eine als Komponente (B2) besonders bevorzugte Gruppe hochverzweigter Polymerer sind die dendritischen Polymeren, die auch als Dendrimere, Kaskadenpolymere oder "starburst"-Polymere bezeichnet werden. Hierunter werden synthetische Makromoleküle verstanden, die man schrittweise durch Verknüpfung von jeweils 2 oder mehr Monomeren mit jedem bereits gebundenen Monomeren aufbaut, so dass mit jedem Schritt die Zahl der Monomer-Endgruppen exponentiell anwächst und am Ende eine kugelförmige Baumstruktur entsteht. Bevorzugte Dendrimere sind Polyaminoamide (PAMAM) mit primären Aminofunktionen an den Zweigenden, bevorzugt sind solche der Generation ≥ 0. Unter der Generation 0 werden Dendrimere mit folgender Struktur verstanden:

[-CH₂N(CH₂CH₂CONHCH₂CH₂NH₂)₂]₂,

Besonders bevorzugt sind Dendrimere der Generation ≥ 1, wobei Dendrimere der Generation 1 folgende Struktur aufweisen:

[-CH₂N[CH₂CH₂CONHCH₂CH₂N(CH₂CH₂CONHCH₂CH₂NH₂)₂]₂]₂

Die Strukturen der höheren Generationen, bevorzugt bis Generation 6, ergeben sich aus dem obigen systematischen Aufbau von Generation 0 zur Generation 1.

Dendrimere können hergestellt werden zum Beispiel durch Stufenreaktion von Ammoniak oder von geeigneten Vertretern der oben erwähnten Alkylendiamine der allgemeinen Formel R⁴R⁵N-Z -NR⁶R⁷ mit Acrylsäureestern. R⁴, R⁵, R⁶, R⁷ bedeuten in diesen Fällen Wasserstoff. Z bedeutet eine lineare oder verzweigte gesättigte oder ungesättigte Alkylenkette mit ≥ 2 C-Atomen. Der Polymeraufbau findet dabei statt durch Michael-Addition der Aminogruppen an die olefinischen Doppelbindungen und Kondensation von Aminogruppen mit Estergruppen. Es ist dabei ein geeigneter molarer Überschuß an Aminen zu wählen.

Weitere geeignete Aminkomponenten für den Dendrimeraufbau finden sich in den oben erwähnten Gruppen der Cycloalkylendiamine, der Diamine die sowohl Alkylals auch Cycloalkylreste besitzen und der Gruppe der aminfunktionalisierten Polyalkylenglykole. Alle in Frage kommenden Aminbausteine besitzen in diesen Fällen 2 primäre Aminofunktionen.

Eine weitere bevorzugte Gruppe hochverzweigter Polymerer, die als Komponente (B2) eingesetzt werden, entsteht zum Beispiel durch Stufenreaktion von Acrylsäureestern mit geeigneten Vertretern der oben erwähnten polyfunktionellen Amine der allgemeinen Formel H₂N-(CH₂CH₂-NH)x-CH₂CH₂-NH₂ mit 2 ≤ x ≤ 10, wie z.B. Diethylentriamin, Triethylentetramin, Tetraethylenpentamin, Pentaethylenhexamin.

Weitere bevorzugt als Komponente (B2) einsetzbare Verbindungen werden durch Reaktion eines Überschusses von Verbindungen, die erfindungsgemäß als Komponente (B1) eingesetzt werden, mit den zuvor beschriebenen Verbindungen, die erfindungsgemäß als Komponente (B2) eingesetzt werden und die zusätzlich mindestens zwei cyclische Carbonatgruppen im Molekül aufweisen, hergestellt.

In diesen Fällen ist ein ausreichender molarer Überschuß an Amin in Relation zu Cyclocarbonat einzusetzen, damit in den Reaktionsprodukten die für den erfindungsgemäßen Einsatz als Komponente (B2) erforderliche Aminfunktionalität vorhanden ist.

Die erfindungsgemäß einsetzbare Komponente (B2) kann auch durch Reaktion eines Überschusses der oben erwähnten, als Komponente (B1) einsetzbaren niedermolekularen polyfunktionellen Amine mit cyclischen Carbonaten hergestellt werden, die ein mittleres Molekulargewicht (Mₙ) von weniger als 1000 g/mol, bevorzugt von 100 g/mol bis 800 g/mol bis aufweisen. In diesen Fällen ist ein geeigneter molarer Überschuß an Amin in Relation zu Cyclocarbonat zu wählen, so dass einerseits das erfindungsgemäße Molekulargewicht erreicht und zusätzlich die erfindungsgemäße Aminfunktionalität für den Einsatz als Komponente (B2) vorhanden ist.

Die erfindungsgemäß eingesetzte Komponente (B2) wird als Einzelkomponente oder auch als Mischung der entsprechenden, als Komponente (B2) einsetzbaren Verbindungen eingesetzt.

Das erfindungsgemäße Bindemittel-System eignet sich insbesondere als Kleb-/Dichtstoff.

Gegenstand der vorliegenden Erfindung ist daher auch ein Verfahren zur Herstellung eines Kleb-/Dichtstoffes unter Verwendung des erfindungsgemäßen Bindemittel-Systems, wobei man Komponente (A) mit Komponente (B) im Verhältnis der Carbonatgruppen zu primären Amingruppen von 30:1 bis 0,2:1, bevorzugt 10:1 bis 0,4:1, besonders bevorzugt von 5:1 bis 0,5:1 und insbesondere von 2:1 bis 0,6:1 mischt. Sind keine primären Amingruppen im Molekül enthalten, so ist das Verhältnis auf die sekundären Amingruppen anzuwenden. Dabei sind jeweils die funktionellen Gruppen der Komponenten A, A1 sowie B1, B2 insgesamt zu berücksichtigen.

In einer bevorzugten Ausführungsform des erfindungsgemäßen Verfahrens geschieht die Reaktion zwischen Komponente (A) und Komponente (B) in Gegenwart eines Lösemittels.

Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

In einer besonderen Ausführungsform des erfindungsgemäßen Verfahrens geschieht die Reaktion zwischen Komponente (A) und Komponente (B) unter Katalyse. Hierzu werden der Mischung katalytische Mengen einer Base hinzugegeben. Derartige Basen und einzusetzende Mengen sind in der US 5,977,266 und der WO 02/079148 beschrieben. Insbesondere wird auf die WO 98/50345, Seite 3, Zeile 1 bis Seite 4, Zeile 17, Bezug genommen. Der Katalysator kann aber auch bereits in Komponente (A) oder (B) enthalten sein. Zur Verklebung oder Abdichtung wird mindestens eine Seite eines zu verklebenden oder zu dichtenden Substrats mit der Mischung beschichtet und die so beschichtete Seite mit mindestens einem weiteren Substrat verbunden.

Das erfindungsgemäße Bindemittel-System eignet sich zum Verkleben und Dichten der unterschiedlichsten Substrate. Zu diesen Substraten zählen beispielsweise Holz, Metall, Glas, Pflanzenfasern, Stein, Papier, Cellulosehydrat, Kunststoffe wie Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide, insbesondere Kunststofffolien, Metalle, insbesondere Folien aus Aluminium, Blei oder Kupfer.

Insbesondere eignet sich das erfindungsgemäße Bindemittel-System als Zweikomponenten-Klebstoff zum Verkleben von Papier, Pappe, Holz, Kunststoff, Metall oder Steingut.

In einer besonders bevorzugten Ausführungsform der Erfindung wird das erfindungsgemäße Bindemittel-System als lösemittelfreier oder lösemittelhaltiger Kaschierklebstoff verwendet.

Das erfindungsgemäße Bindemittel-System kann mit allen gängigen Auftragsverfahren auf die zu verklebenden Substrate aufgebracht werden, beispielsweise durch Sprühen, Rakeln, 3-4-Walzenauftragswerke im Falle der Anwendung eines lösemittelfreien Bindemittel-Systems oder 2 Walzenauftragswerke im Falle der Anwendung eines lösemittelhaltigen Bindemittel-Systems.

Durch seine niedrige Viskosität eignet sich das erfindungsgemäße Bindemittel-System insbesondere zum Verkleben temperaturempfindlicher Kunststofffolien, beispielsweise von Polyolefinfolien, insbesondere von Polyolefinfolien aus Polyethylen oder Polypropylen.

Ein weiterer Gegenstand der vorliegenden Erfindung ist daher auch ein Verfahren zur Herstellung von Folienverbunden, die durch das teil- oder vollflächige Verkleben von mindestens zwei gleichen oder unterschiedlichen Kunststofffolien erhältlich sind, unter Verwendung des erfindungsgemäßen Bindemittel-Systems.

Der Auftrag des Bindemittel-Systems als Zwei-Komponenten-Klebstoff auf die zu verklebenden Folien kann mit üblicherweise für solche Zwecke eingesetzten Maschinen, beispielsweise mit herkömmlichen Laminiermaschinen, erfolgen.

Ein weiterer Gegenstand der Erfindung ist eine Verbundfolie, hergestellt nach dem erfindungsgemäßen Verfahren unter Verwendung des erfindungsgemäßen Bindemittel-Systems. Die Verbundfolie ist insbesondere zur Verpackung von Lebens- und Genussmitteln und Arzneimitteln geeignet.

Das erfindungsgemäße Bindemittel-System kann übliche Additive, wie Weichmacher, Silane, Antioxidantien, UV-Stabilisierungsmittel und Alterungsschutzmittel enthalten. Bevorzugt einsetzbare Weichmacher sind Phthalsäureester, beispielsweise Dioctylphthalat, Ditridecylphthalat und Butylbenzylphthalat, Phosphorsäureester, beispielsweise Tricresylphosphat, Adipate, beispielsweise Dioctyladipat, oder Benzoate, beispielsweise Propylenglykoldibenzoat.

Amino-, Epoxy-, oder Mercaptosilane, insbesondere γ-Glycidyloxypropyl-oder γ-Amino- propyl-trimethoxysilan, dienen vor allem der Verbesserung der Haftung auf Glas, Metallen etc.

Zur Verwendung als Dichtungsmasse werden dem erfindungsgemäßen Bindemittel-System anorganische Füllstoffe wie Ruß, Calciumcarbonat, Titandioxid und dergleichen zugesetzt. Als anorganische Füllstoffe finden vorzugsweise hochdisperse Kieselsäuren, vor allem pyrogene Kieselsäuren oder Fällungskieselsäuren Verwendung, welche thixotropierend wirken und deren thixotropierende Eigenschaften in den erfindungsgemäßen Bindemittel-Systemen auch nach längerer Lagerung erhalten bleiben.

Nachfolgend soll die Erfindung an einigen exemplarischen Beispielen näher erläutert werden. Dabei sind die angegeben Mengen Gewichtsprozent, falls nicht anders angegeben.

## Patentansprüche

1. Zweikomponenten-Klebstoff aus einem Bindemittel-System enthaltend die Komponenten (A) und (B), bei dem
a) eine mindestens zwei zyklische Carbonatgruppen tragende Verbindung, oder ein Gemisch aus zwei oder mehr mindestens zwei zyklische Carbonatgruppen tragende Verbindungen als Komponente (A) enthalten ist, wobei Komponente (A) ein mittleres Molekulargewicht (Mₙ) von ≥1000 g/mol aufweist und
b) eine mindestens zwei (-NHR-)-Atomgruppierungen tragende Verbindung oder ein Gemisch aus zwei oder mehr mindestens zwei (-NHR-)-Atomgruppierungen tragende Verbindungen als Komponente (B) enthalten ist, mit R = H, Alkyl- oder Aryl-Rest, und Komponente B als Komponente (B1) ein mittleres Molekulargewicht (Mn) von 60 g/mol bis 500 g/mol oder als Komponente (B2) ein mittleres Molekulargewicht (Mn) von >500 g/mol aufweist, wobei Komponente (B) einzeln als Komponente (B2) oder als Gemisch von (B1) mit (B2) vorliegt,
zum Verkleben von Papier, Pappe, Holz, Kunststoff, Metall oder Steingut.

2. Zweikomponenten-Klebstoff nach Anspruch 1, **dadurch gekennzeichnet, dass** Komponente (A) ein mittleres Molekulargewicht (Mₙ) von 1500 g/mol bis 100000 g/mol, insbesondere bevorzugt von 2000 g/mol bis 50000 g/mol, aufweist.

3. Zweikomponenten-Klebstoff nach Anspruch 1 oder 2, **dadurch gekennzeichnet, dass** Komponente (A) ein zyklische Carbonatgruppen tragendes Polymer ist, ausgewählt aus der Gruppe der fettchemischen Verbindungen, Polyether, Polyetherpolyole, Polyester, Polyesterpolyole, Polycarbonate, Polycarbonsäuren, Polyacrylate, Polymethacrylate, Polyamide, Polyamine, Polyurethane, oder Mischungen daraus.

4. Zweikomponenten-Klebstoff nach einem der Ansprüche 1 bis 3, **dadurch gekennzeichnet, dass** Komponente (A) ein Umsetzungsprodukt ist von zyklischem Hydroxyalkylcarbonat mit einem Anhydridgruppen tragenden, C₁-C₄-Alkylestergruppen tragenden oder Isocyanatgruppen tragenden Polymer.

5. Zweikomponenten-Klebstoff nach Anspruch 4, **dadurch gekennzeichnet, dass** das zyklische Hydroxyalkylcarbonat einen 5-gliedrigen oder 6-gliedrigen Carbonatring aufweist, insbesondere bevorzugt ist Glycerincarbonat.

6. Zweikomponenten-Klebstoff nach Anspruch 1 oder 2, **dadurch gekennzeichnet, dass** Komponente (A) ein Additionsprodukt ist von Kohlendioxid mit einem Epoxidgruppen tragenden Polymer.

7. Zweikomponenten-Klebstoff nach Anspruch 1 bis 6, **dadurch gekennzeichnet, dass** zusätzlich als Komponente (A1) eine zyklische Carbonatgruppen tragende Verbindung mit einem mittleren Molekulargewicht < 1000 g/mol in einer Menge bis zu 60 Gew.% bezogen auf Komponente (A) vorhanden ist.

8. Zweikomponenten-Klebstoff nach einem der Ansprüche 1 bis 7, **dadurch gekennzeichnet, dass** Komponente (B1) ein mittleres Molekulargewicht (Mₙ) von 60 g/mol bis 300 g/mol aufweist.

9. Zweikomponenten-Klebstoff nach Anspruch 8, **dadurch gekennzeichnet, dass** Komponente (B2) ein mittleres Molekulargewicht (Mₙ) von 800 g/mol bis 2000000 g/mol, insbesondere bevorzugt von 1000 g/mol bis 1500000 g/mol, aufweist.

10. Zweikomponenten-Klebstoff nach Anspruch 8, **dadurch gekennzeichnet, dass** Komponente (B1) ausgewählt ist aus der Gruppe der Alkylendiamine, Cycloalkylendiamine, aminfunktionalisierten Polyalkylenglykole und/oder polyfunktionellen Amine.

11. Zweikomponenten-Klebstoff nach Anspruch 8 oder 9, **dadurch gekennzeichnet, dass** Komponente (B2) ein Polymer ist, ausgewählt aus der Gruppe der Polyamine, Polyimine, Polyether, Polyamide, Polyaminoamide, Polyurethane, Polyolefine, Polyvinylamine oder Mischungen daraus.

12. Zweikomponenten-Klebstoff nach Anspruch 8 oder 9, **dadurch gekennzeichnet, dass** Komponente (B2) ein hochverzweigtes Polymer, insbesondere ein Dendrimer, darstellt.

13. Verfahren zur Herstellung eines Zweikomponenten-Klebstoffs nach einem der Ansprüche 1 bis 12, **dadurch gekennzeichnet, dass** man Komponente (A) mit Komponente (B) im Verhältnis der Carbonatgruppen zu primären Amingruppen von 30:1 bis 0,2:1, bevorzugt 10:1 bis 0,4:1, besonders bevorzugt von 5:1 bis 0,5:1 und insbesondere von 2:1 bis 0,6:1 mischt, wobei in Abwesenheit von primären Amingruppen das Mischungsverhältnis auf sekundäre Amingruppen anzuwenden ist.

14. Verwendung des Zweikomponenten-Klebstoffs nach einem der Ansprüche 1 bis 12 als lösemittelfreier oder lösemittelhaltiger Kaschierklebstoff.

15. Verfahren zur Herstellung von Folienverbunden, **dadurch gekennzeichnet, dass** man mindestens zwei gleiche oder unterschiedliche Kunststofffolien teil- oder vollflächig verklebt unter Verwendung eines Zweikomponenten-Klebstoffs nach einem der Ansprüche 1 bis 12.

16. Folienverbund, hergestellt nach dem Verfahren gemäß Anspruch 15.

## Claims

1. A two-component adhesive consisting of a binder system containing components (A) and (B), in which
a) a compound bearing at least two cyclic carbonate groups, or a mixture of two or more compounds bearing at least two cyclic carbonate groups, is contained as component (A), wherein component (A) has an average molecular weight (Mₙ) of ≥ 1,000 g/mol and
b) a compound bearing at least two (-NHR-) groups of atoms, or a mixture of two or more compounds bearing at least two (-NHR-) groups of atoms, is contained as component (B), where R = H, an alkyl or aryl functional group, and component B has an average molecular weight (Mn) of from 60 g/mol to 500 g/mol as component (B1) or an average molecular weight (Mn) of > 500 g/mol as component (B2), wherein component (B) is present individually as component (B2) or as a mixture of (B1) with (B2),
for bonding paper, cardboard, wood, plastics, metal or earthenware.

2. The two-component adhesive according to claim 1, **characterized in that** component (A) has an average molecular weight (Mₙ) of from 1,500 g/mol to 100,000 g/mol, particularly preferably from 2,000 g/mol to 50,000 g/mol.

3. The two-component adhesive according to claim 1 or 2, **characterized in that** component (A) is a polymer bearing cyclic carbonate groups, selected from the group of fatty chemical compounds, polyethers, polyether polyols, polyesters, polyester polyols, polycarbonates, polycarboxylic acids, polyacrylates, polymethacrylates, polyamides, polyamines, polyurethanes, or mixtures thereof.

4. The two-component adhesive according to one of claims 1 to 3, **characterized in that** component (A) is a reaction product of cyclic hydroxyalkyl carbonate with a polymer bearing anhydride groups, C₁-C₄ alkyl ester groups or isocyanate groups.

5. The two-component adhesive according to claim 4, **characterized in that** the cyclic hydroxyalkyl carbonate has a 5-membered or 6-membered carbonate ring, particularly preferably is glycerol carbonate.

6. The two-component adhesive according to claim 1 or 2, **characterized in that** component (A) is an addition product of carbon dioxide with a polymer bearing epoxy groups.

7. The two-component adhesive according to claims 1 to 6, **characterized in that** a compound bearing cyclic carbonate groups and having an average molecular weight of < 1,000 g/mol is additionally present as component (A1) in an amount of up to 60 wt.% based on component (A).

8. The two-component adhesive according to one of claims 1 to 7, **characterized in that** component (B1) has an average molecular weight (Mₙ) of from 60 g/mol to 300 g/mol.

9. The two-component adhesive according to claim 8, **characterized in that** component (B2) has an average molecular weight (Mₙ) of from 800 g/mol to 2,000,000 g/mol, particularly preferably from 1,000 g/mol to 1,500,000 g/mol.

10. The two-component adhesive according to claim 8, **characterized in that** component (B1) is selected from the group of alkylene diamines, cycloalkylene diamines, amine-functionalized polyalkylene glycols and/or polyfunctional amines.

11. The two-component adhesive according to claim 8 or 9, **characterized in that** component (B2) is a polymer, selected from the group of polyamines, polyimines, polyethers, polyamides, polyaminoamides, polyurethanes, polyolefins, polyvinyl amines, or mixtures thereof.

12. The two-component adhesive according to claim 8 or 9, **characterized in that** component (B2) is a hyperbranched polymer, in particular a dendrimer.

13. A method for preparing a two-component adhesive according to one of claims 1 to 12, **characterized in that** component (A) is mixed with component (B) in a ratio of the carbonate groups to the primary amine groups of from 30:1 to 0.2:1, preferably 10:1 to 0.4:1, particularly preferably 5:1 to 0.5:1 and in particular 2:1 to 0.6:1, it being possible to apply the mixing ratio to secondary amine groups, in the absence of primary amine groups.

14. The use of the two-component adhesive according to one of claims 1 to 12 as a solvent-free or solvent-containing laminating adhesive.

15. A method for preparing film composites, **characterized in that** at least two identical or different plastics films are bonded over part or all of the surface using a two-component adhesive according to one of claims 1 to 12.

16. A film composite, prepared in accordance with the method according to claim 15.

## Revendications

1. Adhésif à deux composants composé d'un système de liant contenant les composants (A) et (B), dans lequel
a) est présent, en tant que composant (A), un composé portant au moins deux groupes carbonate cyclique, ou un mélange de deux composés ou plus portant au moins deux groupes carbonate cyclique, le composant (A) ayant une masse molaire moyenne (Mₙ) ≥1000 g/mol et
b) un composé portant au moins deux groupements d'atomes (-NHR-) ou un mélange de deux composés ou plus portant au moins deux groupements d'atome (-NHR-) est présent comme composant (B), avec R = H, radical alkyle ou aryle, et le composant B a, en tant que composant (B1), une masse molaire moyenne (Mn) de 60 g/mol à 500 g/mol ou, comme composant (B2), une masse molaire moyenne (Mn) >500 g/mol, le composant (B) se présentant individuellement en tant que composant (B2) ou sous forme de mélange de (B1) et (B2),
pour le collage de papier, carton, bois, plastique, métal ou terre cuite.

2. Adhésif à deux composants selon la revendication 1, **caractérisé en ce que** le composant (A) a une masse molaire moyenne (Mₙ) de 1 500 g/mol à 100 000 g/mol, de manière particulièrement préférée de 2 000 g/mol à 50 000 g/mol.

3. Adhésif à deux composants selon la revendication 1 ou 2, **caractérisé en ce que** le composant (A) est un polymère portant des groupes carbonate cyclique, sélectionné dans le groupe des composés chimiques gras, des polyéthers, des polyéther-polyols, des polyesters, des polyester-polyols, des polycarbonates, des acides polycarboxyliques, des polyacrylates, des polyméthacrylates, des polyamides, des polyamines, des polyuréthanes, ou de mélanges de ces derniers.

4. Adhésif à deux composants selon l'une des revendications 1 à 3, **caractérisé en ce que** le composant (A) est un produit de réaction d'un carbonate cyclique d'hydroxyalkyle avec un polymère portant des groupes anhydride, portant des groupes alkylester en C₁-C₄ ou portant des groupes isocyanate.

5. Adhésif à deux composants selon la revendication 4, **caractérisé en ce que** le carbonate cyclique d'hydroxyalkyle comporte un noyau de carbonate à 5 chaînons ou 6 chaînons, correspond de manière particulièrement préférée à du carbonate de glycérol.

6. Adhésif à deux composants selon la revendication 1 ou 2, **caractérisé en ce que** le composant (A) est un produit d'addition du dioxyde de carbone avec un polymère portant des groupes époxyde.

7. Adhésif à deux composants selon la revendication 1 à 6, **caractérisé en ce qu'**un composé portant des groupes carbonate cyclique et ayant une masse molaire moyenne < 1 000 g/mol est présent, en plus, en tant que composant (A1), dans une quantité allant jusqu'à 60 % par rapport au composant (A).

8. Adhésif à deux composants selon l'une des revendications 1 à 7, **caractérisé en ce que** le composant (B1) a une masse molaire moyenne (Mₙ) de 60 g/mol à 300 g/mol.

9. Adhésif à deux composants selon la revendication 8, **caractérisé en ce que** le composant (B2) a une masse molaire moyenne (Mₙ) de 800 g/mol à 2 000 000 g/mol, de manière particulièrement préférée de 1 000 g/mol à 1 500 000 g/mol.

10. Adhésif à deux composants selon la revendication 8, **caractérisé en ce que** le composant (B1) est choisi dans le groupe constitué des alkylène diamines, cycloalkylène diamines, polyalkylène glycols à fonctionnalité amine et/ou amines polyfonctionnelles.

11. Adhésif à deux composants selon la revendication 8 ou 9, **caractérisé en ce que** le composant (B2) est un polymère sélectionné dans le groupe des polyamines, polyimines, polyéthers, polyamides, polyamino-amides, polyuréthanes, polyoléfines, polyvinylamines ou des mélanges de ces derniers.

12. Adhésif à deux composants selon la revendication 8 ou 9, **caractérisé en ce que** le composant (B2) représente un polymère hautement ramifié, en particulier un dendrimère.

13. Procédé de fabrication d'un adhésif à deux composants selon l'une des revendications 1 à 12, **caractérisé en ce que** l'on mélange le composant (A) avec le composant (B) selon un rapport entre les groupes carbonate et les groupes amine primaires de 30:1 à 0,2:1, de préférence de 10:1 à 0,4:1, de manière particulièrement préférée de 5:1 à 0,5: 1 et en particulier de 2:1 à 0,6:1, le rapport de mélange étant appliqué à des groupes amine secondaire, en l'absence de groupes amine primaire.

14. Utilisation de l'adhésif à deux composants selon l'une des revendications 1 à 12 en tant qu'adhésif de contrecollage avec ou sans solvant.

15. Procédé de fabrication de films composites, **caractérisé en ce que** l'on colle au moins deux films en matière plastique similaires ou différents sur une partie ou la totalité de leur surface en utilisant un adhésif à deux composants selon l'une des revendications 1 à 12.

16. Film composite, fabriqué selon le procédé de la revendication 15.
